Europäisches Patentamt

European Patent Office

Office européen des brevets

(19)

(11) Veröffentlichungsnummer: **0 220 416**
**B1**

(12) **EUROPÄISCHE PATENTSCHRIFT**

(45) Veröffentlichungstag der Patentschrift:
14.02.90

(21) Anmeldenummer: 86111738.0

(22) Anmeldetag: 25.08.86

(51) Int. Cl.⁴: **B01D 53/36**, B01J 21/06,
B01J 23/22

(54) Katalysatormaterial zur Reduktion von Stickoxiden.

(30) Priorität: 06.09.85 DE 3531810

(43) Veröffentlichungstag der Anmeldung:
06.05.87 Patentblatt 87/19

(45) Bekanntmachung des Hinweises auf die Patenterteilung:
14.02.90 Patentblatt 90/7

(84) Benannte Vertragsstaaten:
AT BE CH DE FR GB IT LI NL SE

(56) Entgegenhaltungen:
EP-A- 0 149 966
DE-A- 2 617 744
DE-C- 2 458 888
FR-A- 2 366 058
GB-A- 1 430 730

(73) Patentinhaber: Siemens Aktiengesellschaft,
Wittelsbacherplatz 2, D-8000 München 2(DE)

(72) Erfinder: Schmelz, Helmut, Dipl.-Phys. Dr.,
Rudolf-Sieck-Strasse 14, D-8210 Prien(DE)
Erfinder: Thomann, Helmut, Dipl.-Chem. Dr., Kössener
Strasse 15, D-8000 München 70(DE)
Erfinder: Kuschke, Renate, Lecherwiese 11,
D-8152 Feldkirchen-Westerham(DE)
Erfinder: Wilbert, Eva-Helga, Ludwig-Merk-Strasse 11, ·
D-8000 München 40(DE)
Erfinder: Gajewski, Wolfgang, Dipl.-Phys. Dr.,
Bruckerweg 37, D-8520 Buckenhof(DE)
Erfinder: Sprehe, Josef, Dipl.-Ing., Quittenweg 32a,
D-8510 Fürth-Vach(DE)
Erfinder: Landgraf, Norbert, Dipl.-Ing. (FH), Am
Dachsberg 24, D-8501 Rückersdorf(DE)
Erfinder: Ranly, Hans, Dr., Wassergasse 20,
D-8521 Marloffstein(DE)
Erfinder: Balling, Lothar, Dipl.-Ing. (FH),
Marienstrasse 6, D-8510 Fürth(DE)
Erfinder: Reppisch, Richard, Thuringer Strasse 10,
D-8522 Herzogenaurach(DE)
Erfinder: Hein, Dietmar, Prof. Dr., Emdener Strasse 19,
D-8500 Nürnberg 90(DE)

ACTORUM AG

**Beschreibung**

Die Erfindung bezieht sich auf ein Katalysatormaterial zur Reduktion von Stickoxiden in Rauchgasen in Gegenwart von Ammoniak.

Es ist bereits bekannt, Stickoxide in Abgasen in Gegenwart von Ammoniak katalytisch zu molekularem Stickstoff zu reduzieren (DE-AS 24 58 888). Hierzu wird das Gasgemisch im Temperaturbereich von 150° bis 550°C mit einem Katalysator in Berührung gebracht, der aus einer innigen Mischung der nachfolgenden Komponenten:

(A) Titan in Form von Oxiden,
(B) wenigstens ein Metall aus der Gruppe
B-1 Eisen und Vanadium in Form von Oxiden und/oder Sulfaten und/oder der Gruppe
B-2 Molybdän, Wolfram, Nickel, Kobalt, Kupfer, Chrom und Uran in Form von Oxiden,
(C) Zinn in Form von Oxiden
(D) Metalle aus der Gruppe Beryllium, Magnesium, Zink, Bor, Aluminium, Yttrium, seltene Erdenelemente, Silicium, Niob, Antimon, Wismut und Mangan in Form von Oxiden,

besteht, wobei die Komponenten in den Atomverhältnissen A zu B zu C zu D = 1 zu 0,01 - 10 zu 0 - 0,2 zu 0 - 0,15 vorhanden sind.

Mit einem solchen Katalysatormaterial lassen sich brauchbare Ergebnisse bei der Reduktion der Stickoxide erzielen. Jedoch kann, wie aus dieser vorbekannten Auslegeschrift (Spalte 6, Zeilen 56 uff) zu entnehmen ist, Titanoxid in der calcinierten Rutil- oder Anatasform nicht ohne chemische Umsetzung als katalytische Komponente verwendet werden.

Der vorliegenden Erfindung liegt zum Einen die Aufgabe zugrunde, den Temperaturbereich bekannter Katalysatoren zu erweitern, indem ein anders hergestellter Katalysator eingesetzt wird. Darüber hinaus sollte hierbei auch ein umweltschonenderes Herstellverfahren erarbeitet werden, welches nach Möglichkeit auch zu preiswerter Herstellung führen sollte.

Diese Aufgabe wird durch die Merkmale des Anspruchs 1 gelöst. Weitere vorteilhafte Weiterbildungen sind den Ansprüchen 2 bis 14 zu entnehmen.

Mit der Verwendung von Titanoxid in der calcinierten Anatasmodifikation wird nicht nur ein anderes Ausgangsmaterial zur Herstellung des Katalysatormaterials ohne chemische Behandlung im Sinne der DE-AS 24 58 888 erschlossen, vielmehr wird darüber hinaus durch die Vermahlung des ansonsten unvorbehandelten Titanoxids in calcinierter Anatasmodifikation mit Vandiumoxid und einem oder mehreren Oxiden der Elemente Wolfram, Molybdän, Phosphor, Chrom, Kupfer, Eisen, Uran erreicht, daß sich diese verschiedenen Komponenten nicht bloß vermischen, sondern durch den Mahlprozeß in eine katalytisch wirksame Kombination übergeführt werden. Dieses Vermahlen der verschiedenen Metalloxide führt zu einer katalytisch wirksamen Verbindung, die sich von der bloßen Mischung dieser Partikel unterscheidet. Es wird durch diesen Prozeß vermieden, daß die Bestandteile der übrigen Metalloxide im Vergleich zur "innigen Mischung" in weit geringerem Ausmaß in das Titanoxidkristallgitter eindringen können und so die katalytische Wirksamkeitmindern. Schließlich ist dieses auf eine rein mechanischthermische Behandlung beruhende Herstellverfahren den bisher bekannten Verfahren infolge seiner geringen Umweltbelastung überlegen.

In vorteilhafter Weiterbildung der Erfindung kann das Titanoxid nach dem Vermahlen mit einem oder mehreren Oxiden der übrigen Elemente und nach der ersten thermischen Behandlung nochmals mit weiteren Oxiden der übrigen Elemente vermahlen und einer weiteren thermischen Behandlung unterzogen werden. Diese Herstellweise ermöglicht es, eine schrittweise Belegung der Titanoxidoberfläche vorzunehmen.

Diese letztgenannte Herstellweise ist zugleich auch die Voraussetzung dafür, um das Titanoxid in einer weiteren Ausgestaltung der Erfindung vor der ersten Temperaturbehandlung unter Ausschluß von Vanadiumoxid mit einem oder mehreren der übrigen Metalloxide zu vermahlen.

In zweckmäßiger Weiterbildung der Erfindung können die Oxide des Wolframs und Molybdäns ganz oder zumindest teilweise durch Phosphor in Form von Oxiden und/oder Phosphaten substituiert sein. Diese Maßnahme hat, wie noch gezeigt wird den Vorzug, eine hohe Konversionsrate auch im oberen Temperaturbereich zu ermöglichen.

Weitere Einzelheiten der Erfindung werden anhand zweier Ausführungsbeispiele erläutert:

Fig. 1 gibt die prozentuale Zusammensetzung der Hauptbestandteile von drei verschiedenen Katalysatormaterialien an und

Fig. 2 gibt die Abhängigkeit der NO-Konversionsrate von der Reaktionstemperatur an.

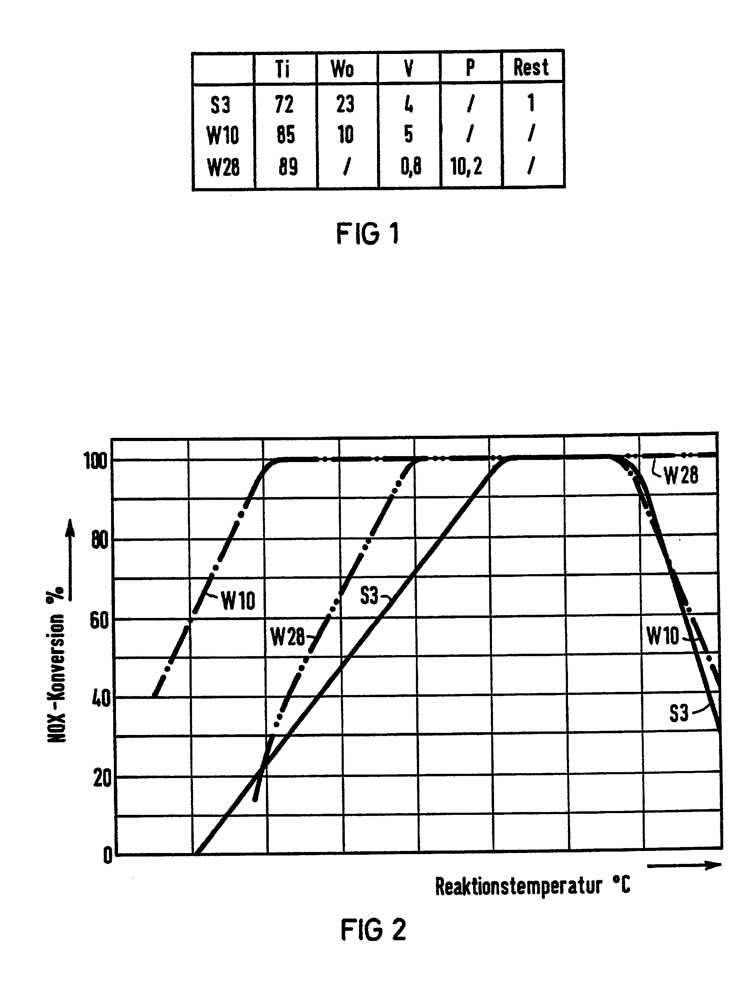

In der Fig. 1 sind die Atomprozente eines mit "S3" bezeichneten, aus Titanoxid ($TiO_2$), Wolframoxid ($WO_3$) und Vanadiumoxid ($V_2O_5$) bestehenden Katalysatormaterials angegeben. Seine wesentlichen Elemente Titan, Wolfram und Vanadium stehen in Atomprozenten ausgedrückt, im Verhältnis von 72:23:4 zueinander. Dieser Katalysator "S3" er im folgenden als Referenzkatalysator, er stammt von den Anmelderinnen der DE-AS 24 58 888 und dürfte im wesentlichen nach dem dort in Spalten 49, Zeilen 34 bis Spalte 50, Zeilen 14 beschriebenen Verfahren hergestellt worden sein.

Die Katalysatortestung wurde in einem Integralreaktor vorgenommen, wobei ein Testgas bestehend aus NO, $NH_3$, $O_2$ und $N_2$ sowie geringere Mengen an $SO_2$ und $H_2O$ eingesetzt wurde. Fig. 2 zeigt die Abhängigkeit der Konversionsrate von der Reaktionstemperatur. Man erkennt hier anhand der Fig. 2, daß die Konversion von NO zu $N_2$, die ab einer bestimmten Temperatur einsetzt, bei Steigerung der Temperatur einem Maximalwert zustrebt, bei dem alles NO zu $N_2$ umgesetzt wird und oberhalb eines bestimmten Temperaturbereiches wieder abfällt. Die maximale Konversionsrate erstreckt sich dabei nur über einen ca. 200°C breiten Temperaturbereich. Das hat zur Folge, daß die Rauchgastemperatur am Katalysatorort für diesen Temperaturbereich geregelt werden muß, es sei denn die Verbrennungsanlage wird mit konstanter Leistung gefahren.

Im Gegensatz zu diesem vorbekannten Katalysator "S3" wurde der erfindungsgemäße Katalysator "W10" aus Titanoxid in calcinierter Anatas-Modifikation hergestellt. Dieses Material wurde gemeinsam mit Vandaiumoxid ($V_2O_5$) und Wolframoxid ($WO_3$) in einer Suspension mit deionisiertem Wasser in einer Mühle vermahlen. Hierzu eignen sich insbesondere Exzenterringscheibenmühlen und Ringkammerstiftmühlen. Hierbei wurde der Feststoffgehalt der Suspension auf 30% eingestellt. Nach dem Vermahlen wurde das so erhaltene Produkt getrocknet und bei 500°C calciniert. Vor der Verwendung wurde das Katalysatormaterial nochmals gemahlen. In Atomprozenten ausgedrückt verhalten sich Titan zu Wolfram zu Vanadium wie 85:10:5.

Die Temperaturabhängigkeit der Konversionsrate ist beim Einsatz dieses Materials unter vergleichbaren Versuchsbedingungen in Fig. 2 dargestellt. Man erkennt, daß beim Katalysatormaterial "W10" die vollständige Umsetzung von NO zu $N_2$ bereits bei einer deutlich niedrigeren Temperatur als beim Katalysatormaterial "S3" erfolgt und daß sich diese Konversionsrate über einen wesentlich größeren Temperaturbereich erstreckt, um erst bei höheren Temperaturen abzusinken. Im oberen Temperaturbereich unterscheidet sich das Verhalten des Katalysatormaterial "W10" gegenüber dem Testgas nicht wesentlich von jenem des vorbekannten Katalysatormaterials "S3".

Bei der Herstellung eines weiteren erfindungsgemäßen Katalysator "W28" wurde wiederum Titanoxid ($TiO_2$) in calcinierter Anatas-Modifikation verwendet und gemeinsam mit Vanadiumoxid und verschiedenen Phosphaten oder Phosphoroxiden in deionisiertem Wasser zu einer Suspension mit ca. 30% Feststoffanteil verarbeitet. Diese wurde vermahlen und nach einer Vortrocknung bei ca. 500°C calciniert. Das erhaltene Produkt wurde sodann vor der Testung zerkleinert. Dieses mit "W28" bezeichnete Katalysatormaterial enthält, wie die Fig. 1 zeigt, 89 Atomprozent Titan, keinerlei Wolfram, nur 0,8 Atomprozent Vanadium und 10,2 Atomprozent Phosphor.

Fig. 2 zeigt die Temperaturabhängigkeit der Konversionsrate bei Einsatz dieses Materials unter gleichen Versuchsbedingungen. Man erkennt, daß die Konversion von NO zu $N_2$ erst bei einer etwas höheren Temperatur einsetzt, als bei dem vorbekannten Katalysator "S3", dafür aber steiler ansteigt und die maximale Konversionsrate bereits bei einer niederen Temperatur erreicht. Besonders auffallend ist, daß dieses Katalysatormaterial "W28", verglichen mit "S3" seine maximale Konversionsrate auch noch in einem höheren Temperaturbereich aufrecht erhält, und sich dadurch vorteilhaft unterscheidet. Im Vergleich zu "S3" wird hier ein breiterer Temperaturbereich für die maximale Konversionsrate beobachtet.

Die beiden Ausführungsbeispiele der Katalysatoren "W10" und "W28" zeigen, daß eine vollständige Konversion des NO zu $N_2$ in einem größeren Temperaturbereich erreicht werden kann als dies mit dem vorbekannten Katalysator "S3" der Fall ist. Dieser Vorteil äußert sich besonders dadurch, daß es mit diesen Katalysatoren gelingt, einen wesentlich breiteren Temperaturbereich abzudecken. Dieser Vorteil wird besonders dann genützt, wenn die Verbrennungsanlage mit variabler Leistung betrieben wird, und die Temperaturschwankungen am Ort des Katalysators ohne Einfluß auf die Konversionsrate bleiben. Ein weitere Vorteil der beiden erfindungsgemäßen Katalysatoren ist es, daß hier ein neues Herstellverfahren verwendet wird, das den Vorzug hat, nicht umweltbelastend zu sein. Es werden andere Ausgangsmaterialien verwendet und es wird ein rein mechanisches und thermisches Herstellverfahren eingesetzt. Es sind weder chemische Anlagen erforderlich noch entsteht irgendeine Abwasserproblematik. Insbesondere fällt die bei den vorbekannten Herstellverfahren des Katalysators "S3" zwangsläufige Freisetzung von Ammoniak bzw. Ammoniumverbindungen und anderen genehmigungspflichtigen Stoffen weg. Darüber hinaus ist der Verfahrensablauf und die Prozeßüberwachung bei diesem neuen Herstellverfahren einfacher und daher ökonomischer. Eine weitere Kostenminderung ergibt sich, wenn wie beim "W28" das teuere Wolfram- und Vanadiumoxid durch Phosphoroxid oder Phosphat ersetzt werden.

Statt des verwendeten deionisierten Wassers kann die Suspension der Ausgangsstoffe ebensogut in einer organischen Flüssigkeit, wie z.B. Alkohol erfolgen. Als Mühlen haben sich in allen Fällen Exzenterscheibenmühlen und Ringkammerstiftmühlen bewährt.

## Patentansprüche

1. Katalysatormaterial zur Reduktion von Stickoxiden in Rauchgasen in Gegenwart von Ammoniak,
**dadurch gekennzeichnet,**
daß als Ausgangsmaterial Titanoxid in calcinierter Anatasmodifikation verwendet und gemeinsam mit Vanadiumoxid und einem oder mehreren Oxiden der Elemente Wolfram, Molybdän, Phosphor, Chrom, Kupfer, Eisen, Uran vermahlen und danach mindestens einer thermischen Behandlung unterzogen wird.

2. Katalysatormaterial nach Anspruch 1,
**dadurch gekennzeichnet,**
daß das Titanoxid mit einem oder mehreren Oxiden der übrigen Elemente vermahlen und danach einer thermischen Behandlung unterzogen wird und das Zwischenprodukt anschließend erneut mit einem oder mehreren Oxiden der übrigen Elemente vermahlen und einer weiteren thermischen Behandlung unterzogen wird.

3. Katalysatormaterial nach Anspruch 2,
**dadurch gekennzeichnet,**
daß das Titanoxid vor der ersten Temperaturbehandlung unter Ausschluß von Vanadiumoxid mit einem oder mehreren Oxiden der übrigen Elemente vermahlen wird.

4. Katalysatormaterial nach Anspruch 1 oder 2,
**dadurch gekennzeichnet,**
daß die Oxide der Elemente Wolfram und Molybdän ganz oder teilweise durch Phosphor in Form von Oxiden oder Phosphaten substituiert sind.

5. Katalysatormaterial nach Anspruch 4,
**dadurch gekennzeichnet,**
daß die Summe der in Form von Oxiden eingesetzten Elemente Wolfram, Molybdän, Vanadium, Chrom, Kupfer, Eisen und Uran in Mengen von kleiner als 1 Atom % bezogen auf Titan, und Phosphor in Form seiner Oxide und/oder Phosphate in Mengen von 1 bis 30 Atom % bezogen auf Titan vorliegen.

6. Katalysatormaterial nach Anspruch 1 oder 2,
**dadurch gekennzeichnet,**
daß die Oxide der Elemente Wolfram und Molybdän ganz oder teilweise durch Schwefel in Form von Sulfiten und/oder Sulfaten substituiert sind.

7. Katalysatormaterial nach Anspruch 6,
**dadurch gekennzeichnet,**
daß die Summe der in Form von Oxiden eingesetzten Elemente, Wolfram, Molybdän, Vanadium, Chrom, Kupfer, Eisen und Uran in Mengen von kleiner als 1 Atom % bezogen auf Titan und Schwefel in Form seiner Sulfite und/oder Sulfate in Mengen von 1 bis 30 Atom % bezogen auf Titan vorliegen.

8. Katalysatormaterial nach Anspruch 1,
**dadurch gekennzeichnet,**
daß die Komponenten solange miteinander in einer geeigneten Mühle, vermahlen werden, bis eine Oberfläche von von 10 bis 500 m²/g entsteht.

9. Katalysatormaterial nach Anspruch 8,
**dadurch gekennzeichnet,**
daß die Komponenten trocken vermahlen werden.

10. Katalysatormaterial nach Anspruch 8,
**dadurch gekennzeichnet**
daß die Komponenten naß vermahlen werden.

11. Katalysatormaterial nach Anspruch 10,
**dadurch gekennzeichnet,**
daß als Flüssigkeit bei der Naßvermahlung anorganische und/oder organische Flüssigkeiten eingesetzt werden.

12. Katalysatormaterial nach Anspruch 1,
**dadurch gekennzeichnet,**
daß das Material bei der thermischen Behandlung auf eine Temperatur im Bereich von 200° bis 900°C aufgeheizt wird.

13. Katalysatormaterial nach Anspruch 2 oder 3,
**dadurch gekennzeichnet,**
daß viele Vermahlungsschritte und thermische Behandlungsschritte einander abwechselnd hintereinander geschaltet sind und für jeden Vermahlungsschritt jeweils weitere Oxide der übrigen Elemente zugegeben werden.

14. Katalysatormaterial nach Anspruch 1,
**dadurch gekennzeichnet,**
daß die thermische Behandlung durch den erstmaligen betriebsmäßigen Einsatz zur Rauchgasentstickung vollzogen wird.

**Claims**

1. Catalyst material for the reduction of nitric oxides in exhaust gases in the presence of ammonia, characterised in that titanium oxide in calcined anatase modification is used as starting material and is milled together with vanadium oxide and one or several oxides of the elements tungsten, molybdenum, phosphorus, chromium, copper, iron and uranium and is then subjected to at least one thermal treatment.

2. Catalyst material according to claim, characterised in that the titanium oxide is milled with one or several oxides of the other elements and is then subjected to a thermal treatment, and the intermediate product is then milled again with one or several oxides of the other elements and is subjected to a further thermal treatment.

3. Catalyst material according to claim 2, characterised in that before the first temperature treatment the titanium oxide is milled with one or several oxides of the other elements other than vanadium oxide.

4. Catalyst material according to claim 1 or 2, characterised in that the oxides of the elements tungsten and molybdenum are completely or partially substituted by phosphorus in the form of oxides or phosphates.

5. Catalyst material according to claim 4, characterised in that the sum of the elements tungsten, molybdenum, vanadium, chromium, copper, iron and uranium, used in the form of oxides, is present in amounts of less than 1 atom % relative to titanium, and phosphorus in the form of its oxides and/or phosphates is present in amounts of 1 to 30 atom % relative to titanium.

6. Catalyst material according to claim 1 or 2, characterised in that the oxides of the elements tungsten and molybdenum are completely or partially substituted by sulphur in the form of sulphites and/or sulphates.

7. Catalyst material according to clam 6, characterised in that the sum of the elements tungsten, molybdenum, vanadium, chromium, copper, iron and uranium, used in the form of oxides, is present in amounts of less than 1 atom % relative to titanium, and sulphur in the form of its sulphites and/or sulphates is present in amounts of 1 to 30 atom % relative to titanium.

8. Catalyst material according to claim 1, characterised in that the components are milled together in a suitable mill until a surface area of 10 to 500 m²/g is achieved.

9. Catalyst material according to claim 8, characterised in that the components are milled dry.

10. Catalyst material according to claim 8, characterised in that the components are milled wet.

11. Catalyst material according to claim 10, characterised in that inorganic and/or organic liquids are used as the liquid in wet milling.

12. Catalyst material according to claim 1, characterised in that during thermal treatment the material is heated to a temperature in the range of from 200° to 900°C.

13. Catalyst material according to claim 2 or 3, characterised in that many milling steps and thermal treatment steps alternating with each other are used one after the other and for each milling step further oxides of the other elements are respectively added.

14. Catalyst material according to claim 1, characterised in that the thermal treatment is completed on the first time that the catalyst is used to remove nitrogen from the exhaust gas.

## Revendications

1. Catalyseur de réduction d'oxydes d'azote, dans des gaz de fumée en présence d'ammoniac, caractérisé en ce que de l'oxyde de titane, sous forme d'anatase calcinée, est utilisé comme matière de départ et est broyé avec de l'oxyde de vanadium et l'un ou plusieurs des oxydes des éléments que sont le tungstène, le molybdène, le phosphore, le chrome, le cuivre, le fer et l'uranium, et est soumis ensuite au moins à un traitement thermique.

2. Catalyseur suivant la revendication 1, caractérisé en ce que l'oxyde de titane est broyé avec un ou avec plusieurs oxydes des autres éléments et est ensuite soumis à un traitement thermique, et ensuite le produit intermédiaire est broyé à nouveau avec un ou avec plusieurs oxydes des autres éléments, et est soumis à un autre traitement thermique.

3. Catalyseur suivant la revendication 2, caractérisé en ce que l'oxyde de titane est broyé avant le premier traitement thermique, à l'exclusion de l'oxyde de vanadium, avec un ou avec plusieurs oxydes des éléments.

4. Catalyseur suivant la revendication 1 ou 2, caractérisé en ce que les oxydes des éléments que sont le tungstène et le molybdène sont remplacés, en tout ou partie, par du phosphore sous la forme d'oxydes ou de phosphates.

5. Catalyseur suivant la revendication 4, caractérisé en ce que la somme des éléments engagés sous forme d'oxydes, que sont le tungstène, le molybdène, le vanadium, le chrome, le cuivre, le fer et l'uranium, représente des quantités inférieures à 1% en atome rapportées au titane, et le phosphore, sous forme de ses oxydes et/ou de phosphates, représente des quantités de 1 à 30% en atome rapportées au titane.

6. Catalyseur suivant la revendication 1 ou 2, caractérisé en ce que les oxydes des éléments que sont le tungstène et le molybdène sont remplacés, en tout ou partie, par du soufre sous la forme de sulfites et/ou de sulfates.

7. Catalyseur suivant la revendication 6, caractérisé en ce que la somme des éléments engagés sous forme d'oxydes, que sont le tungstène, le molybdène, le vanadium, le chrome, le cuivre, le fer et l'uranium, représente des quantités inférieures à 1% en atome rapportées au titane, et le soufre, sous la forme de ses sulfites et/ou de ses sulfates, représente des quantités de 1 à 30% en atome rapportées au titane.

8. Catalyseur suivant la revendication 1, caractérisé en ce que les constituants sont broyés entre eux dans un broyeur convenable jusqu'à obtention d'une surface spécifique de 10 à 500 m²/g.

9. Catalyseur suivant la revendication 8, caractérisé en ce que les constituants sont broyés à sec.

10. Catalyseur suivant la revendication 8, caractérisé en ce que les constituants sont broyés en voie humide.

11. Catalyseur suivant la revendication 10, caractérisé en ce que, comme liquide pour le broyage en voie humide, sont utilisés des liquides minéraux et/ou organiques.

12. Catalyseur suivant la revendication 1, caractérisé en ce que le matériau est porté, lors du traitement thermique, à une température comprise entre 200° et 900°C.

13. Catalyseur suivant la revendication 2 ou 3, caractérisé en ce que plusieurs stades de broyage et stades de traitement thermique sont effectués successivement en alternance et, à chaque stade de broyage, des oxydes supplémentaires des autres éléments sont ajoutés.

14. Catalyseur suivant la revendication 1, caractérisé en ce que le traitement thermique est effectué par la première mise en service pour la dénitruration des gaz de fumée.

|     | Ti | Wo | V   | P    | Rest |
|-----|----|----|-----|------|------|
| S3  | 72 | 23 | 4   | /    | 1    |
| W10 | 85 | 10 | 5   | /    | /    |
| W28 | 89 | /  | 0,8 | 10,2 | /    |

FIG 1

FIG 2